Europäisches Patentamt

European Patent Office

Office européen des brevets ·

(19)

(11) Veröffentlichungsnummer: **0 163 110**

**A2**

(12) ## EUROPÄISCHE PATENTANMELDUNG

(21) Anmeldenummer: 85104845.4

(22) Anmeldetag: 22.04.85

(51) Int. Cl.⁴: **G 01 F 11/42**

(30) Priorität: 30.04.84 DE 3416005
12.10.84 DE 3437450

(43) Veröffentlichungstag der Anmeldung:
04.12.85 Patentblatt 85/49

(84) Benannte Vertragsstaaten:
AT BE CH DE FR GB IT LI LU NL SE

(71) Anmelder: Henkel Kommanditgesellschaft auf Aktien
Postfach 1100 Henkelstrasse 67
D-4000 Düsseldorf-Holthausen(DE)

(72) Erfinder: Osberghaus, Rainer, Dr.
Südallee 47
D-4000 Düsseldorf(DE)

(72) Erfinder: Kresse, Franz
Lochner Weg 40
D-4010 Hilden(DE)

(72) Erfinder: Scheller, Bernfrid
Beethovenstrasse 110
D-5024 Pulheim(DE)

(54) Dosiervorrichtung.

(57) Um in einer Dosiervorrichtung ständig eine flüssige Dosiermenge bereitzuhalten, werden einem Vorratsbehälter (1) eine erste Dosierkammer (2) und eine zweite Dosierkammer (20) auf einem räumlich niedrigeren Niveau als der Vorratsbehälter (1) zugeordnet. Die Verbindung zwischen Vorratsbehälter und Dosierkammern sowie zwischen diesen und einer System-Auslaßoffnung (8) wird durch einen Mehr-Wege-Hahn (21) gebildet. Der Hahn (21) besitzt eine Sperrstellung und kann wahlweise zugleich den Vorratsbehälter (1) und die erste Dosierkammer (2) sowie die zweite Dosierkammer (21) und die Auslaßoffnung (8) oder den Vorratsbehälter (1) und die zweite Dosierkammer (20) sowie die erste Dosierkammer (20) und die Auslaßoffnung (8) verbinden.

Fig.1

Patentanmeldung
Henkelstr. 67
4000 Düsseldorf, den 9. 10. 1984

0163110
HENKEL KGaA
ZR-FE/Patente
Bor/C

P a t e n t a n m e l d u n g
D 7159

"Dosiervorrichtung"

Die Erfindung betrifft eine Dosiervorrichtung mit einem Vorratsbehälter und einer mit diesem über ein Ventil verbundenen Dosierkammer.

Es gibt zum Dosieren von Flüssigkeiten geeignete Dosiervorrichtungen mit Ventilen, z.B. Kugelventilen, zwischen einem Vorratsbehälter und einer Dosierkammer. Hierzu gehören Kippdosierer gemäß DE-GM 78 10 073. Das Kugelventil ist durch Hin- und Herkippen des Vorratsbehälters zu betätigen und bewirkt, daß die Ein- und Ausflußöffnungen der Dosierkammer beim Kippen geöffnet bzw. verschlossen werden.

Zum Dosieren von Gebrauchslösungen abgemessener Reinigungs- oder Desinfektionsmittel werden auch feststehende Dosierkammern eingesetzt. Die jeweilige Dosierkammer wird aus einem Vorratsbehälter bis zu einem vorgegebenen Niveau gefüllt und bei Bedarf durch Öffnen eines Bodenventils oder dergleichen entleert. Wenn man vergißt, die entleerte Dosierkammer wieder zu füllen, muß beim nächsten Bedarfsfall die Dosierkammer erst gefüllt werden, bevor die jeweilige Lösung in der abgemessenen Menge abrufbereit zur Verfügung steht.

Bei den zum Dosieren von Gebrauchslösungen vorgesehenen, räumlich festen Dosierkammern hängt das Einhalten der vorgegebenen Dosiermenge von der von der Bedienungsperson aufgewendeten Sorgfalt ab. Man könnte die Dosierkammer zwar mit einem Schwimmerventil ähnlich dem Wasserkasten

...

bei einem WC ausstatten und auf diese Weise nach einem
Entleeren der Dosierkammer ein automatisches, exaktes
Wiederauffüllen erreichen, eine solche Einrichtung wäre
aber für viele Anwendungszwecke zu aufwendig.

Der Erfindung liegt die Aufgabe zugrunde, eine Dosiervorrichtung zu schaffen, die es ermöglicht, die Dosierkammer ohne das Erfordernis eines Schwimmersystems oder
dergleichen Meß- und Regeleinrichtungen nach dem Entleeren und Schließen des Dosierkammerauslasses selbsttätig
und exakt reproduzierbar wieder zu füllen. Insbesondere
soll erreicht werden, daß möglichst bald nach Verbrauch
einer abgemessenen Lösung erneut eine gefüllte Dosierkammer zur Verfügung steht.

Die erfindungsgemäße Lösung besteht für eine über ein
Ventil mit einem Vorratsbehälter verbundene Dosierkammer
im allgemeinen darin, daß eine erste Dosierkammer auf
einem räumlich niedrigeren Niveau als der Vorratsbehälter angeordnet ist und daß das Ventil ein Mehr-Wege-Hahn
mit wahlweiser, willkürlich herzustellender Verbindung
zwischen dem Vorratsbehälter und der ersten Dosierkammer
oder zwischen der Dosierkammer und einer auf einem räumlich niedrigeren Niveau als die Dosierkammer angeordneten
Auslaßöffnung ist. Bei Verwendung nur einer Dosierkammer
wird das Ventil als Drei-Wege-Hahn, vorzugsweise als Kugelhahn, ausgebildet.

Gemäß weiterer Erfindung wird unter dem Vorratsbehälter
außer der ersten Dosierkammer eine zweite Dosierkammer
angeordnet, und das Ventil wird als Vier-Wege-Hahn mit
einer Sperrstellung und wahlweise willkürlich herzustellenden Verbindungen einerseits zwischen Vorratsbehälter
und erster Dosierkammer sowie zugleich zwischen zweiter

**0163110**
HENKEL KGaA
ZR-FE/Patente

D 7159                    3

Dosierkammer und Auslaßöffnung und andererseits zwischen Vorratsbehälter und zweiter Dosierkammer sowie zugleich zwischen erster Dosierkammer und Auslaßöffnung ausgebildet.

Da sich die Dosierkammer bzw. die Dosierkammern erfindungsgemäß unterhalb des Vorratsbehälters befinden, kann die Fließeigenschaft von Flüssigkeiten zum Dosieren nutzbar gemacht werden. Der Mehr-Wege-Hahn wird jeweils so angeordnet, daß der Weg der Flüssigkeit sowohl vom Vorratsbehälter zur ersten Dosierkammer und gegebenenfalls zur zweiten Dosierkammer als auch von den Dosierkammern zur Auslaßöffnung durch den einen Hahn führt. Wenn daher die jeweils mit der Auslaßöffnung verbundene Dosierkammer beim Dosieren ganz entleert werden soll, ist es wichtig, den Mehr-Wege-Hahn als ganzes unterhalb des niedrigsten Punktes der fraglichen Dosierkammer anzuordnen. Das bedeutet, daß die Dosierkammern vorteilhaft jeweils über ein- und dieselbe Verbindung zum Mehr-Wege-Hahn zu füllen und zu entleeren sind. Das Füllen der Dosierkammern erfolgt im wesentlichen von unten her.

Gemäß weiterer Ausgestaltung der Erfindung wird die Dosierkammer bzw. werden die Dosierkammern in die Baugruppe des Vorratsbehälters integriert. Vorzugsweise kommt ein Anformen an die Unterseite des Vorratsbehälters in Frage, derart, daß der Boden des Vorratsbehälters zugleich wenigstens einen Teil der Decke der jeweiligen Dosierkammer bildet. Gegebenenfalls können zwei Dosierkammern übereinander oder nebeneinander unterhalb des Vorratsbehälters angeordnet werden. Zweckmäßig wird der Boden sowohl der Dosierkammern als auch des Vorratsbehälters in Richtung auf den jeweiligen zum Mehr-Wege-Hahn führenden Bodenabfluß nach unten geneigt. Das heißt, daß die tiefsten

. . . .

0163110
HENKEL KGaA
ZR-FE/Patente

D 7159                                    4

Punkte von Vorratsbehälter und Dosierkammern jeweils über Leitungen mit dem Mehr-Wege-Hahn zu verbinden sind und dieser als "dritter Weg" bzw. "vierter Weg" einen mit der jeweiligen Verbindungsleitung zum Bodenabfluß bzw. -zufluß der jeweiligen Dosierkammer zu koppelnden Abfluß besitzt.

Gemäß noch weiterer Ausgestaltung der Erfindung wird die jeweilige Dosierkammer bis auf den Bodeneinlaß und/oder -auslaß geschlossen ausgebildet. Sie soll lediglich ein von oben her bis zu dem Niveau ihres maximalen Füllvolumens reichendes Be- und Entlüftungsrohr besitzen. Wenn die jeweilige Dosierkammer in den Vorratsbehälter integriert wird, kann das Be- und Entlüftungsrohr nach oben durch den Innenraum des Vorratsbehälters hindurchgeführt werden. Wenn der Vorratsbehälter ebenfalls geschlossen bzw. verschließbar sein soll, ist auch an seiner Oberseite eine Belüftungsöffnung - eventuell kombiniert mit einer Einfüllöffnung - erforderlich.

0163110

HENKEL KGaA
ZR-FE/Patente

D 7159                           5

Anhand der schematischen Darstellung von Ausführungsbeispielen werden Einzelheiten der Erfindung erläutert.
Es zeigen:

  Fig. 1 eine Perspektivzeichnung eines Vorratsbehälters mit einer integrierten Dosierkammer;
  Fig. 2 einen vertikalen Schnitt durch die Anordnung
      nach Fig. 1; und
  Fig. 3 einen vertikalen Schnitt durch eine Dosiervorrichtung mit Vorratsbehälter und zwei
      übereinander angeordneten Dosierkammern.

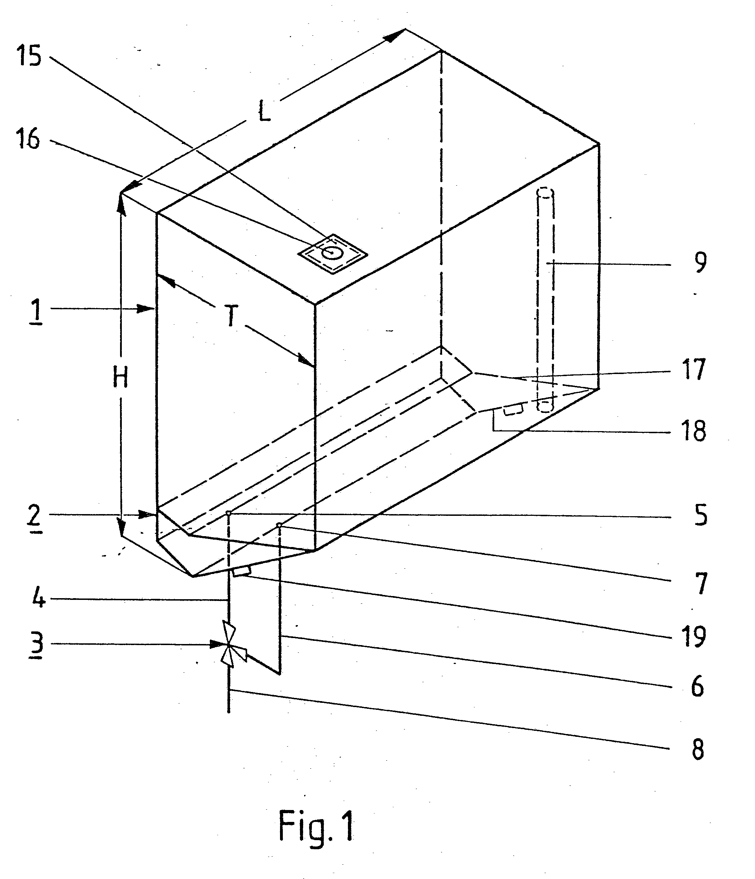

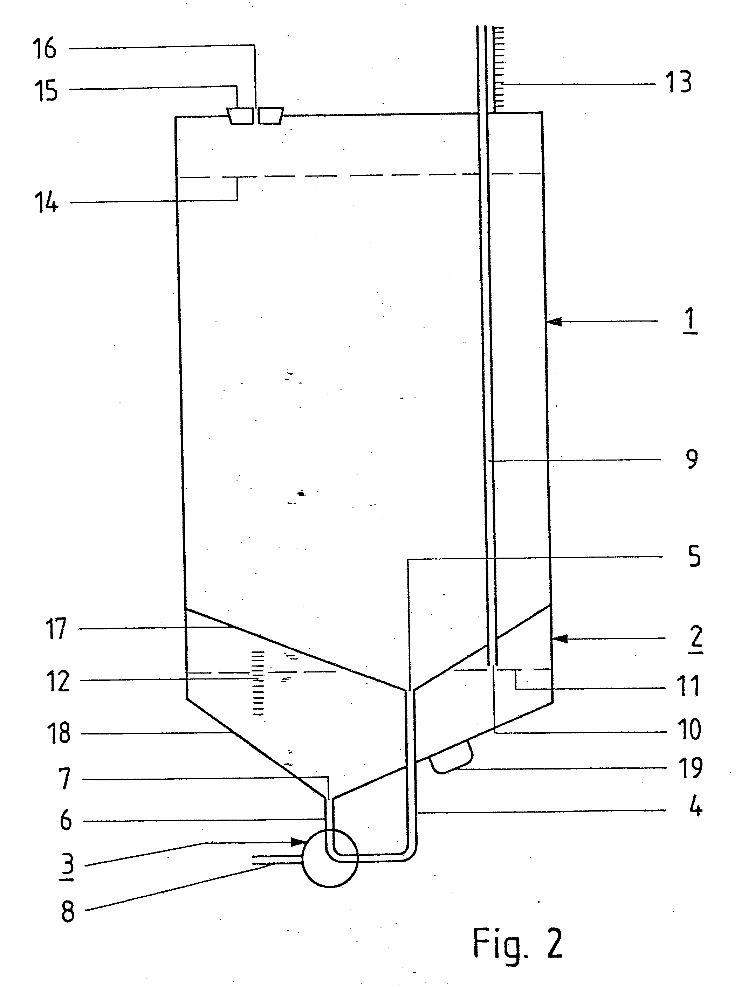

Die Dosiervorrichtung nach Fig. 1 und 2 besteht aus einem
insgesamt mit 1 bezeichneten Vorratsbehälter mit angeformter, insgesamt mit 2 bezeichneter Dosierkammer sowie
aus einem den Vorratsbehälter 1 und die Dosierkammer 2
verbindenden Drei-Wege-Kugelhahn 3. Der Hahn 3 wird über
eine Zuleitung 4 mit dem Bodenauslaß 5 des Vorratsbehälters 1 verbunden und besitzt eine Verbindungsleitung 6
zum Bodenauslaß 7 der Dosierkammer 2. Schließlich geht
vom Hahn 3 eine System-Auslaßöffnung 8 aus.

In der in Fig. 2 gezeichneten Stellung des Hahnkükens
verbindet der Drei-Wege-Hahn 3 die Zuleitung 4 des Vorratsbehälters 1 mit der Verbindungsleitung 6 zur Dosierkammer 2. Bei dieser Winkelstellung des Hahns wird die
Dosierkammer 2 aus dem Vorratsbehälter 1 gefüllt. Wenn
Flüssigkeit aus der Dosierkammer 2 entnommen werden soll,
wird der Hahn aus der Stellung von Fig. 2 so lange gedreht, bis die Verbindungsleitung 6 der Dosierkammer 2
mit der Auslaßöffnung 8 fluchtet. Ersichtlich muß hierzu das Hahnküken bei der Darstellung nach Fig. 2 um 90°
entgegen dem Uhrzeigersinn gedreht werden. Nach Abschluß der Dosierung braucht der Hahn 3 nur wieder in die Stellung nach Fig. 2 zurückgedreht zu werden, um die Auslaßöffnung 8 zu schließen und zugleich eine Nachfüllverbindung zum Vorratsbehälter 1 herzustellen.

Zum Füllen und Entleeren der Dosierkammer 2 wird nach Fig. 1 und 2 eine gesonderte Be- und Entlüftung benötigt, wenn die Dosierkammer geschlossen ausgebildet werden soll. In dem ersten Ausführungsbeispiel wird vorgesehen, ein Be- und Entlüftungsrohr 9 von oben in die Dosierkammer 2 einzuführen. Das Be- und Entlüftungsrohr 9 soll mit seinem unteren Ende 10 bis an das maximale Dosierniveau 11 in die Dosierkammer 2 hineinragen. Bis zu dem die vom Bodenauslaß 7 gegebenenfalls über die Leitung 4, den Hahn 3 und die Leitung 6 kommende Flüssigkeit (zum Erreichen der Dosiermenge) maximal ansteigen darf.

Das höchste in den Dosierkammern 2 zu erreichende Flüssigkeitsniveau 11 wird durch die - vorzugsweise verstellbare - Relativlage des unteren Endes 10 des Be- und Entlüftungsrohrs 9 vorgegeben. In diesem Sinne kann das Be- und Entlüftungsrohr 9 in vertikaler Richtung höhenverstellbar gelagert werden. Eine besondere Sperrstellung des Drei-Wege-Hahns 3 nach Fig. 1 oder 2 ist nicht erforderlich, wenn die einzige Dosierkammer 2 der Konstruktion des Systems entsprechend nur bis zu einem maximalen Niveau 11 gefüllt werden kann.

Zum Vorbestimmen des Dosierkammerinhalts kann eine Skala 12 an der, vorzugsweise durchsichtigen, Dosierkammer 2 oder eine Skala 13 angrenzend an das obere Ende des Be- und Entlüftungsrohrs 9 angebracht werden. Grundsätzlich braucht das Be- und Entlüftungsrohr 9 aber nicht über den

D 7159        7

Vorratsbehälter hinaus zu reichen; es kann beispielsweise innerhalb des Vorratsbehälters 1 oberhalb von dessen maximalem Füllspiegel 14 enden. Das Rohr 9 kann auch seitlich aus der Dosierkammer 2 herausgeführt bzw. lediglich durch eine seitliche Öffnung der Dosierkammer 2 symbolisiert werden. Wenn der Vorratsbehälter 1 auf seiner Oberseite geschlossen sein soll, wird zweckmäßig der in der Deckplatte des Vorratsbehälters 1 vorgesehene Deckel 15 mit einer Belüftungsöffnung 16 ausgestattet.

Die Bodenflächen 17 bzw. 18 des Vorratsbehälters 1 und der Dosierkammer 2 werden zweckmäßig so nach unten zum jeweiligen Bodenauslaß 5 bzw. 7 hin geneigt ausgebildet, daß ein vollständiges Restentleeren möglich ist. Wenn der Flüssigkeitsstand sowohl in Vorratsbehälter 1 als auch in der Dosierkammer 2 jederzeit zu kontrollieren sein soll, können in der Wand des Vorratsbehälters 1 und der Dosierkammer 2 Fenster vorgesehen werden. Zweckmäßig werden die gesamten Wände, Böden usw. von Vorratsbehälter 1 und Dosierkammer 2 aus einem zumindest durchscheinenden Material gefertigt. Beispielsweise ist transparentes PVC für Wände, Böden und Deckel geeignet. Auch der Mehr-Wege-Hahn 3 und seine Zu- und Ableitungen können aus PVC hergestellt werden.

Für die Anwendung zum Dosieren von Gebrauchslösungen, z.B. von Reinigungs- und Desinfektionsmitteln, kann ein Vorratsbehälter 1 mit angeformter Dosierkammer 2 nach Fig. 1 und 2 Außenabmessungen in der Größenordnung von L = 540 mm, H = 390 mm und T = 230 mm besitzen. Der Boden des Gesamtbehälters kann mit einer Halteschiene 19 verstärkt werden.

D 7159                              8

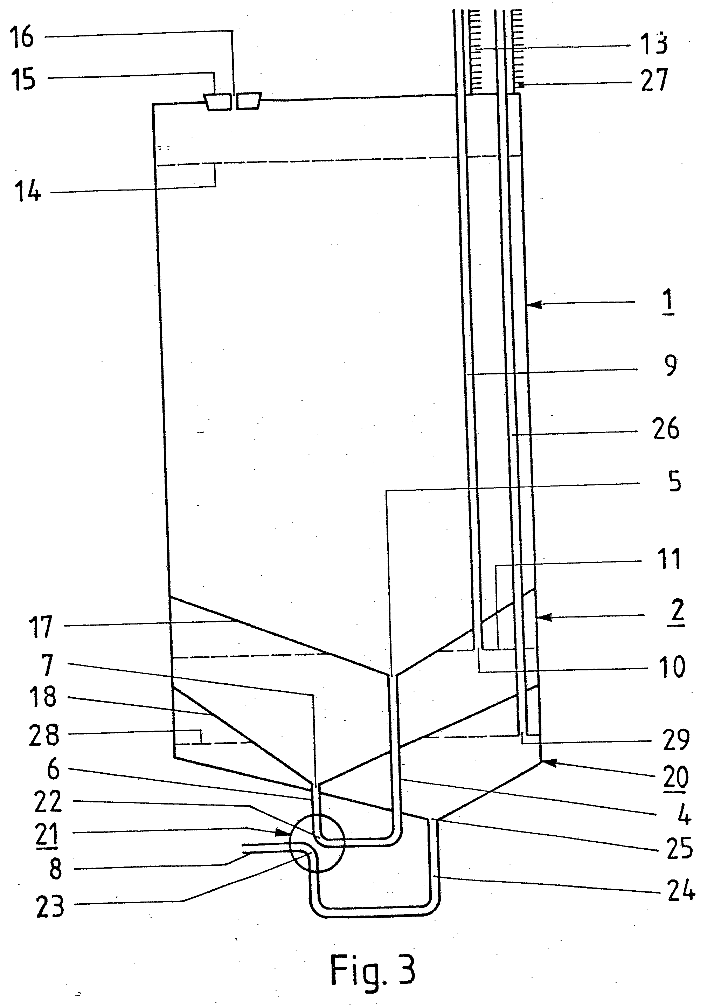

Anhand der Schnittzeichnung nach Fig. 3 wird ein zweites
Ausführungsbeispiel einer Dosiervorrichtung erläutert.
Zu dieser Vorrichtung gehören außer einem Vorratsbehälter
1 mit darunter angeordneter erster Dosierkammer 2 eine
zweite Dosierkammer 20. Mit dem Ausführungsbeispiel nach
Fig. 1 und 2 übereinstimmende Bauteile werden mit derselben Bezugsziffer wie dort bezeichnet.

Im Prinzip unterscheidet sich das anhand von Fig. 3 zu
erläuternde zweite Ausführungsbeispiel außer durch die
hinzugefügte zweite Dosierkammer 20 dadurch, daß Vorratsbehälter 1, erste Dosierkammer 2, zweite Dosierkammer 20 und System-Auslaßöffnung 8 über ein als Vier-Wege-
Hahn 21 ausgebildetes Ventil gekoppelt sind. Der Vier-
Wege-Hahn 21 besitzt zwei getrennte Durchgänge 22 und 23.
In der in Fig. 3 dargestellten Winkelstellung des Hahnkükens verbindet der Durchgang 22 des Hahns 21 den Vorratsbehälter 1 mit der ersten Dosierkammer 2. Zugleich
verbindet der zweite Durchgang 23 des Hahns 21 die Auslaßöffnung 8 mit einer Verbindungsleitung 24 zum Bodenauslaß 25 der zweiten Dosierkammer 20. Wird das Hahnküken
des Vier-Wege-Hahns 21 aus der in Fig. 3 dargestellten
Winkelstellung um etwa 45° nach rechts gedreht, sind alle
gegenseitigen Verbindungen von Vorratsbehälter 1, erster
Dosierkammer 2, zweiter Dosierkammer 20 und Auslaßöffnung
8 gesperrt. Nach weiterem Drehen im Uhrzeigersinn um etwa
45° werden der Vorratsbehälter 1 mit der zweiten Dosierkammer 20 und zugleich die erste Dosierkammer 2 mit der
Auslaßöffnung 8 gekoppelt.

Die Wirkungsweise des Vier-Wege-Hahns 21 nach Fig. 3 ermöglicht durch die Kombination von zwei Dosierkammern 2
und 20 mit einem Vorratsbehälter 1, daß während des Ent-

**0163110**
HENKEL KGaA
ZR-FF/Patente

D 7159                    9

leerens einer Dosierkammer eine andere Dosierkammer gefüllt werden kann. Wegen dieser Gleichzeitigkeit von Entleeren und Füllen steht jeweils sofort nach dem Entleeren einer Dosierkammer eine gefüllte Dosierkammer zur Verfügung.

Das Be- und Entlüften sowie das Vorgeben der gewünschten Dosiermenge in der zweiten Dosierkammer 20 kann auf im Prinzip die gleiche Weise wie in der ersten Dosierkammer 2 erfolgen. Es kann also ebenso wie im Ausführungsbeispiel nach Fig. 1 und 2 ein Be- und Entlüftungsrohr 26 - gegebenenfalls mit Skaleneinteilung 27 zur Höhenverstellung - durch den Vorratsbehälter 1 und durch die erste Dosierkammer 2 hindurch von oben in die zweite Dosierkammer 20 eingeführt werden. Ebenso wie im Falle des ersten Ausführungsbeispiels kann das Be- oder Entlüftungsrohr 26 aber auch seitlich aus der zweiten Dosierkammer 20 herausgeführt werden. Das Be- und Entlüftungsrohr 26 wird bis zu dem vorgesehenen maximalen Füllniveau 28 in die zweite Dosierkammer 20 von oben her eingeführt. Das maximale Füllniveau 28 wird durch die Höhenlage des unteren Endes 29 des Rohrs 26 vorgegeben. Der Boden 30 der zweiten Dosierkammer 20 soll wieder in Richtung auf den Bodenauslaß 26 nach unten geneigt sein.

*lo*

0163110
HENKEL KGaA
ZR-FE/Patente

D 7159

## Bezugszeichenliste

| | | |
|---|---|---|
| 1 | = | Vorratsbehälter |
| 2 | = | Dosierkammer |
| 3 | = | Drei-Wege-Hahn |
| 4 | = | Zuleitung |
| 5 | = | Bodenauslaß von 1 |
| 6 | = | Verbindungsleitung |
| 7 | = | Bodenauslaß von 2 |
| 8 | = | System-Auslaßöffnung |
| 9 | = | Be- und Entlüftungsrohr |
| 10 | = | unteres Ende von 9 |
| 11 | = | Niveau in 2 |
| 12 | = | Skala von 2 |
| 13 | = | Skala von 9 |
| 14 | = | Füllspiegel |
| 15 | = | Deckel |
| 16 | = | Belüftungsöffnung |
| 17 | = | Bodenfläche von 1 |
| 18 | = | Bodenfläche von 2 |
| 19 | = | Halteschiene |
| 20 | = | zweite Dosierkammer |
| 21 | = | Vier-Wege-Hahn |
| 22 | = | Durchgang von 21 |
| 23 | = | Durchgang von 21 |
| 24 | = | Verbindungsleitung |
| 25 | = | Bodenauslaß von 20 |
| 26 | = | Be- und Entlüftungsrohr von 20 |
| 27 | = | Skala von 26 |
| 28 | = | maximales Füllniveau von 20 |
| 29 | = | unteres Ende von 26 |
| 30 | = | Boden von 20 |

D 7159

### Patentansprüche

1. Dosiervorrichtung mit einem Vorratsbehälter (1) und einer mit diesem über ein Ventil verbundenen Dosierkammer (2), dadurch gekennzeichnet, daß eine erste Dosierkammer (2) auf einem räumlich niedrigeren Niveau als der Vorratsbehälter (1) angeordnet ist und daß das Ventil ein Mehr-Wege-Hahn (3) mit wahlweiser, willkürlich herzustellender Verbindung zwischen dem Vorratsbehälter (1) und der ersten Dosierkammer (2) oder zwischen der Dosierkammer (2) und einer auf einem räumlich niedrigeren Niveau als die Dosierkammer angeordneten Auslaßöffnung (8) ist.

2. Dosiervorrichtung nach Anspruch 1, dadurch gekennzeichnet, daß das Ventil als Drei-Wege-Hahn (3), vorzugsweise als Kugelhahn, ausgebildet ist.

3. Dosiervorrichtung nach Anspruch 1, dadurch gekennzeichnet, daß unter dem Vorratsbehälter (8) außer der ersten Dosierkammer (2) eine zweite Dosierkammer (20) angeordnet ist und daß das Ventil als Vier-Wege-Hahn (21) mit einer Sperrstellung und wahlweise willkürlich herzustellenden Verbindungen einerseits zwischen Vorratsbehälter (1) und erster Dosierkammer (2) sowie zugleich zwischen zweiter Dosierkammer (20) und Auslaßöffnung (8) und andererseits zwischen Vorratsbehälter (1) und zweiter Dosierkammer (20) sowie zwischen erster Dosierkammer (2) und Auslaßöffnung (8) ausgebildet ist.

4. Dosiervorrichtung nach einem oder mehreren der Ansprüche 1 bis 3, dadurch gekennzeichnet, daß die Dosierkammer bzw. die Dosierkammern (2, 20) in den Vorratsbehälter (1) integriert sind.

...

D 7159                                2

5. Dosiervorrichtung nach Anspruch 2, dadurch gekennzeichnet, daß die Dosierkammer bzw. die Dosierkammern
(2, 20) an die Unterseite des Vorratsbehälters (1) -
gegebenenfalls nebeneinander oder übereinander - angeformt sind.

6. Dosiervorrichtung nach einem oder mehreren der Ansprüche 1 bis 5, dadurch gekennzeichnet, daß der Boden
(17, 18, 30), sowohl des Vorratsbehälters (1) als auch
derjenige der Dosierkammer bzw. der Dosierkammern (2, 20)
in Richtung auf den jeweiligen, zu dem Mehr-Wege-Hahn
(3, 21) führenden Bodenabfluß (5, 7, 25) nach unten geneigt sind.

7. Dosiervorrichtung nach einem oder mehreren der Ansprüche 1 bis 6, dadurch gekennzeichnet, daß die Dosierkammer bzw. die Dosierkammern (2, 20), insbesondere auch
der Vorratsbehälter (1), an ihrer Oberseite geschlossen
sind und auf der Oberseite oder daran angrenzend eine
Be- und/oder Entlüftungsöffnung (9, 16, 26) besitzen.

8. Dosiervorrichtung nach Anspruch 7, dadurch gekennzeichnet, daß in die jeweils geschlossene Dosierkammer
(2, 20) von oben her ein das maximale Füllniveau (11, 28)
vorgebendes Be- und Entlüftungsrohr (9, 26) hineinragt.

9. Dosiervorrichtung nach einem oder mehreren der Ansprüche 1 bis 8, dadurch gekennzeichnet, daß der Mehr-
Wege-Hahn (3, 21) unterhalb des räumlich niedrigsten Punktes der Anordnung von Vorratsbehälter und Dosierkammern
(2, 20) liegt.

10. Dosiervorrichtung nach einem oder mehreren der An-

...

0163110
HENKEL KGaA
ZR-FE/Patente

D 7159 3

sprüche 1 bis 9, dadurch gekennzeichnet, daß die Dosierkammer bzw. die Dosierkammern (2, 20) jeweils lediglich
eine einzige zum Füllen und Entleeren dienende Verbindungsleitung (6, 24) zwischen Bodenauslaß (7, 25) und
Mehr-Wege-Hahn (3, 21) besitzen.

0163110

1/3

Fig. 1

0163110

Fig. 2

Fig. 3